# EUROPÄISCHE PATENTANMELDUNG

(11) **EP 1 136 769 A2**
(43) Veröffentlichungstag der Anmeldung: **26.09.2001**
(21) Anmeldenummer: 01106508.3
(22) Anmeldetag: 15.03.2001
(51) Int. Cl.: F25B 15/10, F25B 40/00

(54) **Diffusionsabsorptionsanlage**

(30) Priorität: 22.03.2000 DE 10014110
(71) Anmelder: Buderus Heiztechnik GmbH, D-35576 Wetzlar (DE)
(72) Erfinder: Schulte, Uwe, 35037 Marburg (DE); Korinth, Christoph, 57555 Mudersbach (DE); Vloon, Paulus Jacobus, 7422 RM Deventer (NL); Lammert Wierenga, Hendrik Jacob, 8196 KC Welsum (NL)

(57) **Zusammenfassung**

Die Erfindung betrifft eine Diffusionsabsorptionsanlage, insbesondere zur Anwendung als gasbetriebene Wärmepumpe, und dient der Optimierung von Aufbau und Funktion.

Die Diffusionsabsorptionsanlage besitzt einen Wärmeträgerkreislauf über eine Wärmequelle, einen Kälte- bzw. Lösungsmittelkreislauf, einen Kocher, einen Absorber, einen Rektifikator, einen Verdampfer, einen Gas-/Gas-Wärmetauscher, einen Kondensator sowie ein Reservoir für das Kälte- bzw. Lösungsmittel, vorzugsweise für das Stoffsystem AmmoniakWasser.

Gekennzeichnet ist die Erfindung dadurch, dass das Ammoniak nach dem Austritt aus dem Kondensator und vor dem Eintritt in den Verdampfer mit dem Wärmeträgerkreislauf über eine Wärmequelle vorgekühlt wird, um es besser zu verdampfen.

## Beschreibung

Die Erfindung betrifft eine Diffusionsabsorptionsanlage nach dem Oberbegriff des Patentanspruches 1.

Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als Druck ausgleichendes Trägergas in der Regel Wasserstoff oder Helium verwendet wird. Als Arbeitsmedium im Kreisprozess setzt sich das Ammoniak-/Wasser-Gemisch bei Wärmezufuhr durch Temperatur- und Konzentrationsunterschiede in Bewegung.

Die Wärmezufuhr erfolgt in einem Kocher. Durch Sieden werden Gasblasen aus der NH₃reichen Lösung ausgetrieben. Der Wasseranteil in diesem Gasstrom wird im Rektifikator abgeschieden bzw. zurückgeführt, so dass fast nur NH₃-Dampf zum Kondensator strömt. Dabei muss die Gasblasenpumpe so ausgebildet sein, dass sie die Flüssigkeit auf eine erhebliche Höhe pumpt, um die nötige Antriebskraft zu erzeugen. Der hochreine Ammoniakdampf kondensiert und gibt dabei die Kondensationswärme an das Heizungswasser ab. Anschließend strömt das flüssige Ammoniak nach unten in den Verdampfer. In der Helium-/Ammoniak-Atmosphäre verdampft das Ammoniak unter Aufnahme von Umgebungsenergie. Danach gelangt das Gasgemisch durch einen Gas-/Gas-Wärmetauscher und strömt zum Absorber, wo das gasförmige Ammoniak von der NH₃-armen Ammoniak-/ Wasser-Lösung absorbiert wird und die Absorptionswärme an das Heizungswasser abgibt, bevor der geräuschfreie Prozess wieder neu beginnt.

Absorber in Diffusionsabsorptionsanlagen für größere Leistungen müssen in der Lage sein, größere Mengen an Kältemittel zu absorbieren und die Absorptionswärme mit möglichst geringen Verlusten an ein Medium abzugeben. Als Wärme abführendes Medium wird bei Heizungsanlagen Heizungswasser in einem Sekundärsystem verwandt.

Die CH 678 103 enthält eine Diffusionsabsorptionsanlage, bei welcher der Kältemitteldampf nach dem Durchlaufen eines Dreifach-Wärmetauschers in einen Kondensator gelangt. Hier kondensiert der Kältemitteldampf, und Ammoniak als Kondensat fließt durch eine Kondensatleitung in einen Verdampfer, wo es unter Wärmeaufnahme verdampft. Der Verdampfer wird von einem Medium des Sekundärsystems, d. h. vom sogenannten Quellwasser aus dem Kreislauf über eine Wärmequelle, durchströmt. Dabei wird dem Verdampfer Wärme auf einem relativ niedrigen Temperaturniveau zugeführt.

Beispielsweise kann die Temperatur des flüssigen Ammoniaks beim Austritt aus dem Kondensator bei etwa 50 °C liegen und ist erheblich höher als das Temperaturniveau im Verdampfer, mit möglicherweise unter 0 °C.

Grundsätzlich ist das Vorkühlen des Ammoniaks vor dem Verdampfer aus Kreisläufen in der Kälteanlagentechnik bekannt. Es wird dadurch vermieden, dass die Austrittstemperatur am Kondensator erheblich über dem Temperaturniveau des Verdampfers liegt. Allgemein gilt: Je besser die Vorkühlung bzw. je niedriger die Temperatur des Ammoniaks ist, umso leichter lässt es sich verdampfen, und die Leistungszahl einer Wärmepumpe wird positiv beeinflusst. Wichtig für die Verdampfung von Ammoniak ist ein Raum mit niedrigem Dampfdruck. Dazu befindet sich zum Senken des partiellen Dampfdruckes Helium als Trägergas im Kreislauf. Mit der Vorkühlung verringert sich allerdings der Ammoniak-Massenstrom, und im Verdampfer kann weniger Energie aufgenommen werden. Daher müssen Kühleinrichtung und Verdampfer genau aufeinander abgestimmt sein.

Der Erfindung liegt die Aufgabe zugrunde, Aufbau und Funktion einer Diffusionsabsorptionsanlage, insbesondere zur Anwendung als gasbetriebene Wärmepumpe, zu optimieren.

Erfindungsgemäß wird dies mit den Merkmalen des Patentanspruches 1 gelöst. Vorteilhafte Weiterbildungen sind den Unteransprüchen zu entnehmen.

Gekennzeichnet ist die Erfindung dadurch, dass das Ammoniak nach dem Austritt aus dem Kondensator und vor dem Eintritt in den Verdampfer mit einem Wärmeträgerkreislauf über eine Wärmequelle vorgekühlt wird. Dabei wird das flüssige Ammoniak an einem Wärmetauscher vorgekühlt, welcher mit dem Kreislauf über die Wärmequelle verbunden ist.

Der Kreislauf der Wärmequelle durchströmt zunächst den Verdampfer und kühlt dabei ab. Am Ausgang des Verdampfers wird die niedrige Temperatur des Mediums dazu genutzt, das Ammoniak vorzukühlen.

Der Wärmetauscher besitzt vorzugsweise von Quellwasser durchströmte Wicklungen und das flüssige Ammoniak strömt vorzugsweise im Gegenstrom zum Kreislauf über die Wärmequelle. Wärmetauscher bzw. Wicklungen sind in das Gehäuse des Verdampfers integriert oder können alternativ dazu auch außerhalb des Verdampfers, z. B. als ringförmiger Mantel oder separates Bauteil, angebracht sein.

## Patentansprüche

1. Diffusionsabsorptionsanlage, insbesondere zur Anwendung als gasbetriebene Wärmepumpe, mit einem Wärmeträgerkreislauf über eine Wärmequelle, einem Kälte- bzw. Lösungsmittelkreislauf, einem Kocher, einem Absorber, einem Rektifikator, einem Verdampfer, einem Gas-/Gas-Wärmetauscher, einem Kondensator sowie einem Reservoir für das Kälte- bzw. Lösungsmittel, vorzugsweise für das Stoffsystem Ammoniak-Wasser,
**dadurch gekennzeichnet, dass** das Ammoniak nach dem Austritt aus dem Kondensator und vor dem Eintritt in den Verdampfer mit einem Wärmeträgerkreislauf über eine Wärmequelle vorgekühlt wird.

2. Diffusionsabsorptionsanlage nach Anspruch 1,
**dadurch gekennzeichnet, dass** der Kreislauf über die Wärmequelle zunächst den Verdampfer durchströmt und danach, vorzugsweise am Ausgang des Verdampfers, das Ammoniak vorgekühlt wird.

3. Diffusionsabsorptionsanlage nach den Ansprüchen 1 und 2,
**dadurch gekennzeichnet, dass** das flüssige Ammoniak an einem mit dem Wärmeträgerkreislauf über die Wärmequelle verbundenen Wärmetauscher vorgekühlt wird.

4. Diffusionsabsorptionsanlage nach den Ansprüchen 1 bis 3,
**dadurch gekennzeichnet, dass** der Wärmetauscher vorzugsweise aus von Quellwasser durchströmten Wicklungen besteht und das flüssige Ammoniak im Gegenstrom zum Wärmeträgerkreislauf über die Wärmequelle strömt.

5. Diffusionsabsorptionsanlage nach den Ansprüchen 1 bis 4,
**dadurch gekennzeichnet, dass** der Wärmetauscher bzw. die Wicklungen für das flüssige Ammoniak in das Gehäuse des Verdampfers integriert sind.

6. Diffusionsabsorptionsanlage nach den Ansprüchen 1 bis 4,
**dadurch gekennzeichnet, dass** der Wärmetauscher bzw. die Wicklungen das flüssige Ammoniak außerhalb des Verdampfers angebracht sind.
